# EUROPEAN PATENT APPLICATION

(11) **EP 1 176 300 A2**
(43) Date of publication of application: **30.01.2002**
(21) Application number: 01118137.7
(22) Date of filing: 26.07.2001
(51) Int. Cl.: F02D 41/40

(54) **System, method and computer program for controlling fuel injection in a diesel engine**

(30) Priority: 26.07.2000 JP 2000225648
(71) Applicant: Mazda Motor Corporation, Aki-gun, Hiroshima 730-8670 (JP)
(72) Inventor: Saito, Tomoaki, Mazda Motor Corporation, Aki-gun, Hiroshima 730-8670 (JP)
(74) Representative: Müller-Boré & Partner Patentanwälte

(57) **Abstract**

Fuel injection system for suppressing smoke exhausted from a diesel engine is provided. A fuel injector (5) is controlled to inject fuel near top dead center of a compression stroke in such a divided manner that the injected fuel combust continuously, wherein the first injection starts prior to top dead center of a compression stroke, and the second injection starts after timing that the firstly injected fuel is calculated to start firing, thereby the firstly injected fuel increases the chamber temperature to promote combustion of the secondly injected fuel.

## Description

This invention relates to the fuel injection system, method and computer program product for controlling fuel injection for a diesel engine, in particular having fuel injectors that directly inject fuel into the combustion chambers of cylinders.

Typically, in direct injection diesel engines, the whole amount of fuel for one combustion is injected at one point of time near top dead center of the compression stroke (referred to as undivided injection), while if needed, pilot injection where small amount of fuel is injected prior to the undivided injection may be performed. It is also commonly known to provide for a divided injection where whole the fuel amount for one cycle is not sprayed or injected at one time but sprayed or injected at a plurality of times near top dead center of the compression stroke for diesel engines.

Such a pilot injection and a divided injection technology as above are described in several patent publications for instance, as follows. Japanese publication of patent application no. 09-209866 discloses that divided injection starts at top dead center of the compression stroke and the amount of divided part of fuel sprayed increases for later injection to broadly and properly control the heat generation rate in the combustion chambers. Japanese publication of patent application no. 10-122084 discloses that the primary divided injections follow the preliminary injection with such a small amount of fuel that causes an ignition in the combustion chamber to suppress production of soot and NOₓ or nitrogen oxides.

Meanwhile, Japanese publication of patent application no. 10-141124 discloses that preliminary injection is performed in an early stage of intake stroke, and pilot injection is performed prior to primary injection at a point of time near top dead center of compression stroke to locally cause preliminary lean air-fuel mixture compressive ignition, so that production of NOₓ and emission of smoke is reduced while improving fuel efficiency.

Japanese publication of patent application no. 11-200933 discloses pre-injection with a small amount of fuel starting at the at top dead center of the compression stroke aiming to reduce combustion noise and improve in fuel efficiency, as well as post-injection following primary injection aiming to reduce soot and improve in fuel efficiency.

As described above, suppression of NOₓ production and soot reduction have been major issues in diesel engine, however, it has been difficult to achieve both NOₓ reduction and soot reduction within one system.

An object of the invention is to allow a fuel injection which achieves both NOₓ reduction and soot reduction at once.

This object is solved according to the invention by a fuel injection system according to claim 1, a fuel injection method according to claim 7 and by a computer program product for controlling fuel injection according to claim 10. Preferred embodiments of the invention are subject of the dependent claims.

Thus, according to the invention the fuel injection which achieves both NOₓ reduction and soot reduction at once is realised by the modification in a divided fuel injection strategy.
According to the invention, there is provided a fuel injection system that involves a divided fuel injection strategy for a diesel engine comprising a fuel injector so disposed as to front the combustion chamber of the engine, required engine output monitoring means for monitoring a required engine output, injection amount determining means for determining an amount of fuel to be injected based on the required engine output monitored by the monitoring means, fuel injection control means for controlling the fuel injector to inject fuel with the amount determined by the injection amount determining means near a top dead center of a compression stroke in a divided manner such that the injected fuel combust continuously. The fuel injection control means starts the first injection of the divided fuel injection prior to the top dead center of the compression stroke, and starts the second injection of the divided fuel injection after a time interval such that the firstly injected fuel is expected to already have started firing or starts the second injection of the divided fuel injection after timing that the firstly injected fuel is calculated to start firing.

The first fuel injection described above seems to be similar to pilot injection, but differs from it in that the second fuel injection is performed after the firstly injected fuel starts firing, preferably so that substantial continuity is given between the combustion of the firstly injected fuel and the combustion of the secondly injected fuel.

Particularly, conventional pilot injection, as well known, shortens an ignition delay period of primary injection by creating flammable atmosphere for the primary injected fuel, but it substantially contributes to neither the combustion chamber temperature nor the engine torque. Such a pilot injection causes the primary injected fuel to ignite almost simultaneously with the injection, however, because of poor mixing with air at this time, it will not combust rapidly but combust while spreading. In other words, the short ignition delay period suppresses preliminary mixed combustion and prevents rapid combustion, thereby noise is reduced.

To this, according to a preferred embodiment of the invention, the firstly injected fuel increases the combustion chamber temperature by its combustion prior to the second injection and then the second injection is performed during the combustion of the firstly injected fuel to promote combustion of the secondly injected fuel. This preferably results in less smoke being produced because the first injection increases the chamber temperature to promote the combustion of the secondly injected fuel. Moreover, the secondly injected fuel starts combusting almost simultaneously with the injection, therefore the cylinder pressure and the combustion chamber temperature preferably do not increase as abruptly as in the case of preliminary mixed combustion (i.e. explosive combustion of fuel injected during the firing delay period) in the undivided injection. This results in less combustion noise and less NOₓ being produced.

Preferably, the rest of the firstly injected fuel is also injected in the divided manner to suppress soot being produced. If the rest of the firstly injected fuel is injected at one time as in a conventional manner, an injection period (i.e. an injector valve opening period) is relatively longer because of the more amount of fuel to be injected. Due to this longer period, the injected fuel spray will have continuity. The continuous fuel spray insufficiently mixes with air and its combustion is unnecessarily prolonged while the cylinder pressure and the chamber temperature abruptly decrease in an expansion stroke, resulting in incomplete combustion of fuel injected in later stage, which is inclined to produce more smoke or HC or hydrocarbon in exhaust gas.

To this, if the rest of the firstly injected fuel is also injected in the divided manner according to the invention, fuel is injected intermittently to cause the discontinuous spray. Therefore, air exists in the spray gap, and it mixes with the sprayed fuel so sufficiently that the resulting mixture combusts actively, resulting in less smoke being produced.

Preferably, the fuel injection control means starting the second injection of the divided fuel injection at the timing decided according to the fuel amount to be injected so that the second fuel injection start timing is advanced with higher engine speed and/or higher engine load.

Preferably, the first injection of said divided fuel injections terminates prior to an expansion stroke. This is effective to increase the chamber temperature prior to the second injection because the almost whole amount of the firstly injected fuel combust near top dead center of a compression stroke. Preferably, in this case, the second injection following is performed after the top dead center (in the expansion stroke).

Moreover, the amount of the first fuel injection is preferably less than the amount of the second fuel injection when the first injection starts prior to a top dead center of a compression stroke and terminates prior to an expansion stroke. The first fuel injection requires at most such amount as to accomplish its purpose of increasing the chamber temperature to promote the ignition of the secondly injected fuel. The excessive amount of the firstly injected fuel, being more than the specified amount as above, causes unduly high chamber temperature having a tendency of NOₓ production.

Preferably, the interval between the terminating of the first injection and the start of the second injection is set to be between 50 and 1000 µs, more preferably, between 300 and 700 µs. Shorter period than the above range substantially unites the first fuel injection and the second fuel injection to cause poor combustion of the secondly injected fuel. On the other hand, longer period than the above range results in poor continuity between the first fuel combustion and the second fuel combustion, causing insufficient combustion of the secondly injected fuel being disadvantageous to smoke reduction.

As described above, according to the invention, the fuel injector is controlled to inject fuel with the amount of fuel determined by the injection amount determining means near top dead center of a compression stroke in such a divided manner that the injected fuel is combusted continuously, wherein the first injection starts prior to top dead center of a compression stroke, and the second injection starts after timing that the firstly injected fuel is calculated to start firing. This results in less smoke being produced because the first injection increases the chamber temperature to promote the combustion of the secondly injected fuel.

Most preferably, said fuel injection control means controls the first injection to be prior to the top dead center of the compression stroke only under lower engine speed and/or lower engine load.

According to the invention, there is further provided a fuel injection control method for a diesel engine comprising the following steps:
monitoring a required engine output,
determining the amount of fuel to be injected based on the monitored required engine output, and
controlling the injection of fuel to an amount determined in the determination step near a top dead center of a compression stroke in a divided manner so that the injected fuel combusts continuously,
wherein the first injection of said divided fuel injections is started prior to the top dead center of the compression stroke, and the second injection of the divided fuel injection is started after a time interval such that the firstly injected fuel is expected to already have started firing.

According to a preferred embodiment of the invention, the second injection of the divided fuel injection is started at the timing decided according to the fuel amount to be injected so that the second fuel injection start timing is advanced with higher engine speed and/or higher engine load.

Preferably, the first injection of said divided fuel injections is terminated prior to an expansion stroke.

According to the invention, there is further provided a computer program product for controlling fuel injection of a diesel engine comprising code means able to perform, when loaded on a suitable computer system a fuel injection method according to the invention or an embodiment thereof.

These and other objects, features, aspects, and advantages of the present invention will become more apparent from the following detailed description of the preferred embodiments with respect to the accompanied drawings, in which:
FIG. 1 is a schematic diagram showing the entire construction of the fuel injection system for a diesel engine according to the invention.
FIG. 2 is a flow diagram showing the fuel injection control according to the invention.
FIG. 3 is a time chart showing the timing of the divided injection according to the invention.
FIG. 4 is a graph showing the timing of the divided injection and the cylinder pressure according to the invention.

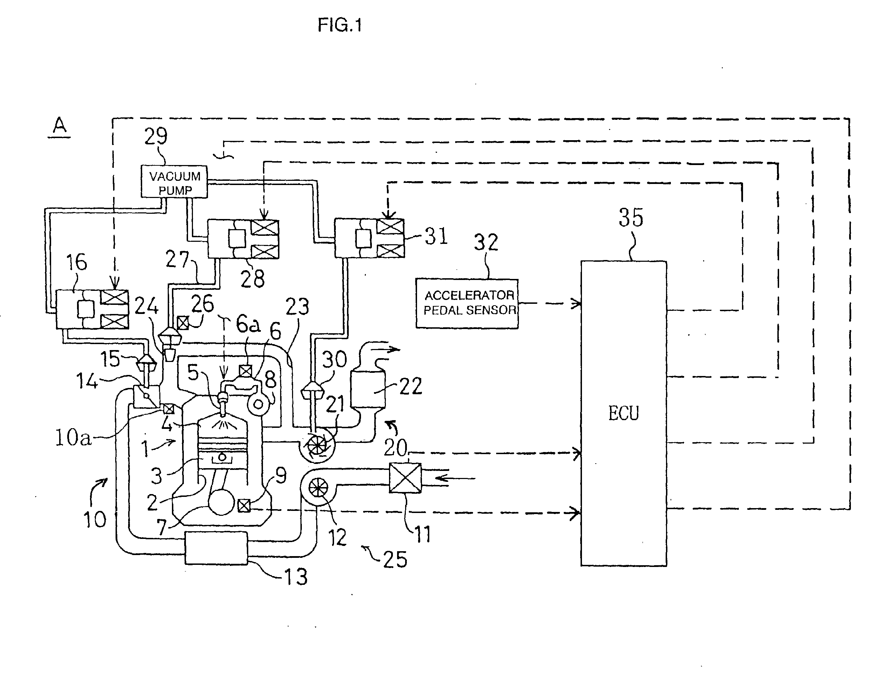

FIG. 1 schematically shows an example of a construction of the fuel injection system A for a diesel engine according to an embodiment of the invention. Identified by 1 is a multi-cylinder diesel engine mounted in a vehicle. The engine 1 comprises a plurality of cylinders 2 (only one cylinder is shown), in each of which a piston 3 is reciprocatively fitted to define a combustion chamber 4 in each cylinder 2. Near preferably the center of top surface of the combustion chamber 4, an fuel injector 5 is so disposed that an injection bore at its leading end is located at or in or projecting into the combustion chamber 4. The injection bore for each cylinder is controlled to open and close for directly injecting the fuel into the combustion chamber 4 at the specified (predetermined or predeterminable) timings.

Each of the injector 5 described above is connected to a common rail (as an accumulation chamber) 6 which accumulates high-pressure fuel, and the common rail 6 is connected to a high-pressure supply pump 8 driven by a crankshaft 7. The high-pressure supply pump 8 so operates or is controlled such as to hold the fuel pressure in the common rail 6 detected by a pressure sensor 6a at the specified level or above. Further, a crank angle sensor 9 is preferably provided for sensing the rotation angle of the crankshaft 7. This crank angle sensor 9 comprises a detectable plate (not shown) provided at the end portion of the crankshaft 7 and an electromagnetic or optical pickup facing to the periphery of the plate. The pickup generates pulsed signals in response to approach of teeth formed at an interval on the outer peripheral surface of the detectable plate.

Identified by 10 is an intake passage that transfers intake air preferably filtered by an air cleaner (not shown) to the combustion chamber 4 in the engine 1. At a surge tank or accumulator (not shown) disposed at the downstream end of the intake passage 10, the intake passage 10 branches into intake ports each communicating with the combustion chamber 4 in each cylinder 2, respectively. The surge tank has an intake air pressure sensor 10a provided for detecting pressure of the air charged into or provided to each cylinder 2. On the intake passage 10, the followings are preferably disposed from upstream toward downstream in order: an intake airflow sensor, preferably a hot-film type air flow sensor 11 for detecting intake airflow in the engine 1, a blower 12 driven by a turbine 21 described below for compressing intake air, an intercooler 13 for cooling the intake air compressed by the blower 12, and a throttle valve (as means for regulating intake air) 14 for throttling or rstericting a cross section area of the intake passage 10, respectively. This throttle valve 14 preferably comprises a butterfly valve formed with a notch so that the intake air passes therethrough even in a fully closed state. Being similar to an EGR (exhaust gas recirculation) valve 24 described below, the valve opening is preferably controlled via vacuum that acts on a diaphragm 15 and is adjusted by vacuum control electromagnetic valve 16. In addition, a sensor (not shown) is provided on or at the throttle valve 14 to detect its opening.

Identified by 20 is an exhaust passage through which exhaust gas is discharged from the combustion chamber 4 of respective cylinders 2, and the passage 20 communicates with the combustion chamber 4 of respective cylinders 2 via an exhaust manifold. On the exhaust passage 20, the followings are preferably disposed from upstream toward downstream in order: an oxygen sensor, preferably a linear O₂ sensor 17 for detecting oxygen concentration in the exhaust gas, a turbine 21 rotated by the exhaust stream, and a catalytic converter 22 which can purify HC, CO, and NOₓ in the exhaust gas.

An exhaust gas recirculation passage (referred to as EGR passage) 23 branches out or off at the portion of the exhaust passage 20 upstream from the turbine 21 and it is connected to the intake passage 10 at the downstream side of the throttle valve 14 to partly recirculate the exhaust gas to the intake passage 10. At the downstream portion of the EGR passage 23, an adjustable exhaust gas recirculation control valve (as a preferred means for regulating intake airflow: referred to as EGR valve) 24 is disposed to regulate a recirculating part of the exhaust gas from the exhaust passage 20 to the intake passage 10.

The EGR valve 24 preferably is of a vacuum sensing type and its vacuum chamber is connected to a vacuum pump (as a vacuum source) 29 via a vacuum passage 27 and an electromagnetic valve 28. The electromagnetic valve 28 opens and closes the vacuum passage 27 according to control signals (of electric current) from an ECU 35 described below, to adjust vacuum for driving the EGR valve 24 in the vacuum chamber, so that the opening of the EGR passage 23 is substantially linearly controlled.

A turbocharger 25 comprises a variable geometry turbocharger (referred to as VGT) having a diaphragm 30 mounted thereon. Vacuum acting on the diaphragm 30 is regulated by an electromagnetic valve 31 so that a cross section area of the exhaust gas passage is or can be adjusted or controlled.

The injector 5, the high-pressure supply pump 8, the throttle valve 14, the EGR valve 24, the turbocharger 25, and other devices described above are respectively so configured as to operate on control signals from the control unit (engine control unit: referred to as ECU) 35. On the other hand, the ECU 35 receives at least an output signal from the following devices: the pressure sensor 6a, an output signal from the crank angle sensor 9, an output signal from the pressure sensor 10a, an output signal from the airflow sensor 11, an output signal from the O₂ sensor 17, an output signal from the temperature sensor 18, an output signal from a lift sensor 26 in the EGR valve 24, an output signal form a accelerator pedal sensor 32 for detecting an accelerator pedal stroke (representing accelerator pedal position operated by the driver, not shown), and an output signal from a coolant temperature sensor (not shown).

Thus, the amount of fuel to be injected by the injector 5 (i.e. fuel supply) and fuel injection timing (i.e. ignition timing) are or can be controlled according to an operating condition of the engine 1, and common rail pressure, or fuel injection pressure is controlled via operation of high-pressure supply pump 8. Additionally, control of EGR gas flow (as the amount of intake air) via operation of the EGR valve 24 and control of the variable geometry turbocharger 25 (i.e. VGT control) are performed.

### (Fuel injection control)

A memory in the ECU 35 described above electronically stores thereon a target torque map or table, preferably empirically determined for defining the optimal target torque for an accelerator pedal position (indicative of engine load) and an engine speed, and a fuel injection amount map or table preferably also empirically determined for defining the optimal amount of injection fuel Q for a specified (predetermined or predeterminable) target torque and a specified (predetermined or predeterminable) engine speed.

Normally, an accelerator pedal travel represented by an output signal from the accelerator pedal travel sensor 32 and an engine speed represented by an output signal from the crank angle sensor 9 are used to determine the target torque, and the target torque and the engine speed are used to determine the amount of fuel Q to be injected, subsequently, the amount Q and a common rail pressure detected by the pressure sensor 6a are used to determine respective activating period (i. e. valve opening period) of respective injectors 5. The amount of fuel to be injected that has been determined in foregoing way may be compensated for the engine coolant temperature, the barometric pressure, or other factors that may affect to the engine operation before used to determine the activating period. In addition, the memory electronically stores an injection dividing map for determining an injection interval between a termination of an injection and the start of the next injection in a divided injection based on an engine speed and the fuel amount Q. The map is preferably also empirically determined.

The basic fuel injection control described above delivers the amount of fuel required for the target torque of the engine 1 (i.e. required output for the engine 1), while the engine 1 operates with lean air/fule A/F condition (in which A/F is equal to or greater than 18). The accelerator pedal travel sensor 32 and the crank angle sensor 9 constitute means for monitoring a required engine output.

According to a preferred embodiment of the invention the injector 5 is controlled to inject fuel with the amount of fuel Q determined based on monitored output by the required engine output monitoring means near top dead center of a compression stroke in such a divided manner that the injected fuel combust continuously, furthermore, in the specified engine operating condition, the first injection starts prior to top dead center of a compression stroke, and the second injection starts after a timing that the firstly injected fuel is calculated to start firing to suppress smoke production.

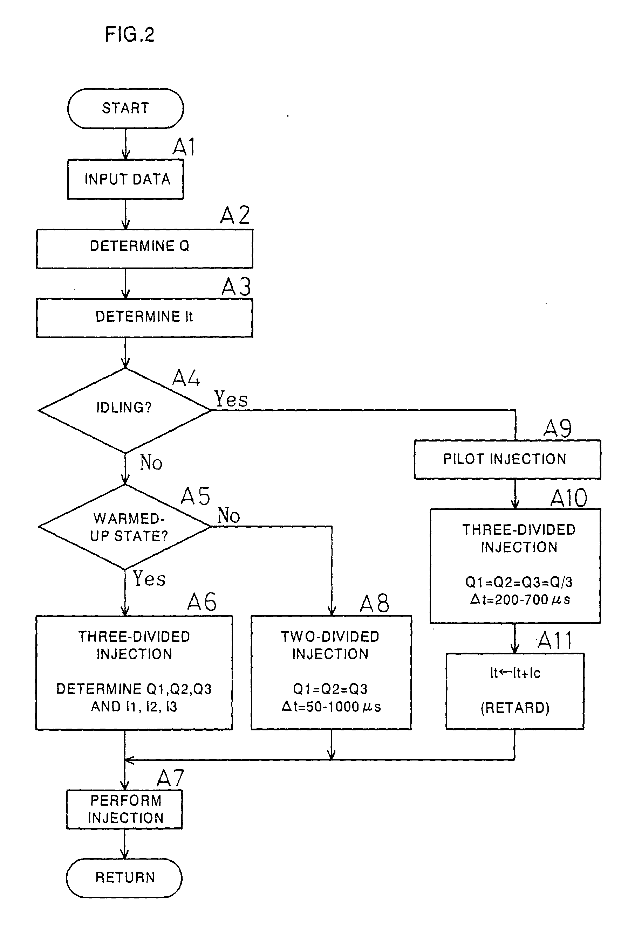

The fuel injection control sequence according to a preferred embodiment of the invention will be described below based on a flow diagram shown in FIG. 2. This control is preferably performed at every predetermined crank angle.

In the first step A1 just after the start, the crank angle signal, the airflow sensor output signal, the accelerator pedal position, and other signals are inputted. In the following step A2, a target torque is determined with reference to a prestored map or table based on the accelerator pedal travel and the engine speed, and the optimal amount of injection fuel Q is determined with reference to a prestored map or table based on the engine speed, the target torque, and the intake airflow. This step A2 constitutes the means for determining the amount of fuel injection.

In the following step A3, a basic injection timing It is then set with reference to a map based on the engine speed and the target torque. This timing It serves as the first injection timing for divided injection, and it is so set as to start prior to top dead center of the compression stroke. In addition, to compensate for the fuel spray ignition delay which varies with the engine coolant temperature and the engine speed, the timing It is so set as to be advanced for lower engine temperature and higher engine speed.

In the following step A4, it determines if the engine 1 is idling or not based on the accelerator pedal travel obtainable from the accelerator pedal travel sensor 32, and in the following step A5, it determines if the engine is in warmed-up state or cold state based on the engine coolant temperature. If the engine 1 is not idling (i.e. No in step A4) and the engine 1 is in warmed-up state (i.e. Yes in step A5), the sequence proceeds to step A6 where the amount of and the timing of the first, second, and third fuel injection (referred to as Q1, Q2, and Q3 as fuel amount and I1, I2, and I3 as injection timing) are so determined respectively as to provide three-divided injection.

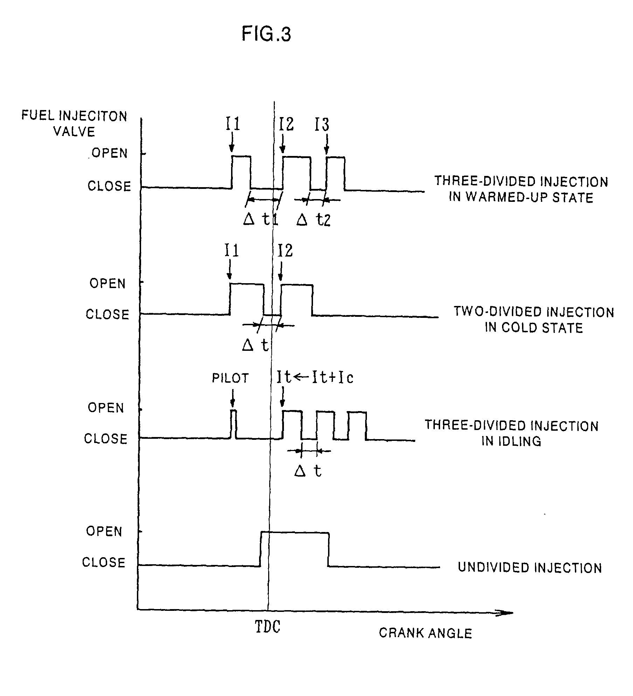

That is, as in FIG. 3 showing the three-divided injection mode illustratively, the first fuel injection starts (or the injection bore is open) at I1 (identical to It) prior to top dead center (referred to as TDC) of the compression stroke, and terminates prior to TDC of the compression stroke, with the amount Q1 being one third or less of the whole amount of fuel injection Q for the cycle. The second fuel injection starts at I2 after TDC of the compression stroke with the amount Q2 being approximately one half of the whole amount Q. The third fuel injection is performed with the amount Q3 being one third or less of the whole amount Q. Both of an injection interval Δt1 between the terminating of the first injection (i.e. valve close or valve closing time) and the start I2 of the second injection (i.e. valve open or valve opening time), and an injection interval Δt2 between the terminating of the second injection (i.e. valve close or valve closing time) and the start (13) of the third injection (i.e. valve open or valve opening time) are 50 - 1000 µs. Where Δt1 is preferably greater than Δt2. Δt1 and Δt2 are so determined with reference to the injection dividing map based on an engine speed and the fuel amount Q as to be shortened within the range with higher engine speed and more fuel amount to be injected. Also, Δt1 is preferably intended or determined or set such that the second injection starts while the firstly injected fuel combusts or is still combusting. Accordingly, the second injection starts (I2) after timing that the firstly injected fuel is empirically calculated, or expected to start firing. I2 and I3 are obtained from the values of Δt1 and Δt2 determined previously. In other words, the first fuel injection is such that its injection amount Q1 is 1/3 or less of a total injection amount Q, its injection start timing (valve-opening timing) I1 (=It) is before a top dead center (TDC) of a compression stroke and its injection end timing (valve-closing timing) is also before the TDC of the compression stroke. The second fuel injection is such that its injection amount Q2 is about 1/2 of the total injection amount Q and its injection start timing is after the TDC of the compression stroke, whereas the third fuel injection is such that its injection amount Q3 is 1/3 or less of a total injection amount Q. An injection interrupted period or injection interval Δt1 between the end (valve closing) of the first fuel injection and the start (valve opening) I2 of the second fuel injection and an injection interrupted period or injection interval Δt2 between the end (valve closing) of the second fuel injection and the start (valve opening) I3 of the third fuel injection are both set at 50 to 1000 µs, wherein the former interrupted period Δt1 is longer than the latter interrupted period Δt2. I2 and I3 are set by determining the injection interrupted periods Δt1, Δt2.

Subsequently, the sequence proceeds to step A7, where fuel injection is performed according to the strategy determined in the preceding step.

Δt1 has such a sufficiently long period that the firing of the firstly injected fuel starts before the second injection, and is so set as to extend as I1 is advanced so that the time in which the valve is ope is longer. Preferably, Δt1 is equal to or greater than 300 µs during which the combustion of the firstly injected fuel can increase temperature sufficiently in the combustion chamber. In addition, Δt1 is preferably equal to or less than 1000 µs, more preferably, it is equal to or less than 700 µs, because it has been shown that unduly long Δt1 inactivates the second combustion due to discontinuity from the first combustion. Meanwhile, Δt2 has such a sufficiently long period as to cause discreteness between the second spray or injection and the third spray or injection. It has been shown that the period less than 50 µs is difficult for sufficient discreteness, while the period greater than 1000 µs insufficiently creates the continuity between the secondly injected fuel and the thirdly injected fuel resulting in inactive combustion of the third injected fuel.

If the engine 1 is not idling (i.e. No in step A4) and the engine 1 is in cold state (i.e. No in step A5), the sequence proceeds to step A8 where the amount of and the timing of the first and second fuel injection (referred to as Q1 and Q2 as fuel amount and I1 and I2 as injection timing) are so determined respectively as to provide two-divided injection (as shown in FIG. 3). That is, Q1 = Q2 = 1/2*Q, I1 = It, and Δt = 50 - 1000 µs. As in the case of step A6, Δt is so determined with reference to the injection dividing map based on an engine speed and the fuel amount Q as to be shortened within the range with higher engine speed and more fuel amount to be injected. Also, Δt is intended or determined or set such that the second injection starts while the firstly injected fuel combusts. Accordingly, the second injection starts after timing that the firstly injected fuel is empirically calculated, or expected to start firing.

It should be noted that I1 is advanced as the engine speed increases and retarded as the engine speed decreases.

If the engine 1 is idling (i.e. Yes in step A4), the sequence proceeds to step A9 where the amount of and the timing for the pilot injection are determined, and in step A10, three-divided injection strategy for idling is set, and then in step A11, It is retarded (as shown in FIG. 3). That is, Q1 = Q2 = Q3 = (1/3) * Q, 11 = It, I1 = It ←It + Ic (retard), and Δt = 200 - 700 µs.

As in the case of step A8, Δt is so determined with reference to the injection dividing map based on an engine speed and the fuel amount Q as to be shortened within the range with higher engine speed and more fuel amount to be injected. Also, Δt is intended or determined or set such that the second injection starts while the firstly injected fuel combusts. In other words, the second injection starts after timing that the firstly injected fuel is empirically calculated, or expected to start firing.

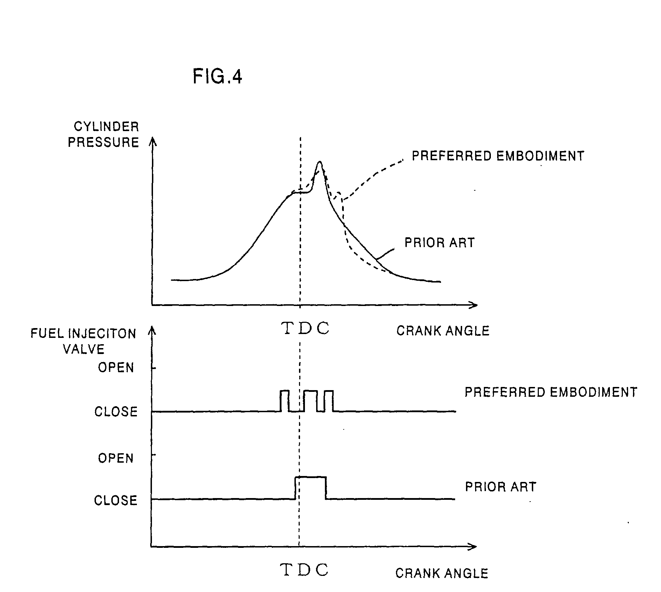

Accordingly, if the engine 1 is not idling and the engine 1 is in warmed-up state, the first fuel injection will start (l1) and terminate prior to top dead center of compression stroke as shown in FIG. 4. Therefore, the firstly injected fuel starts firing near TDC, and the cylinder pressure starts increasing just before TDC as indicated in dashed line in FIG. 4 while the chamber temperature increases to higher level than in undivided injection (indicated in full line). Because the second injection follows in the condition, the combustion of the secondly injected fuel is promoted, so that the cylinder pressure increases and the chamber temperature further increases. In this way, the second injection is performed in high chamber temperature condition resulting from the foregoing to promote the combustion, so that less smoke is produced.

However, because the first fuel injection has relatively smaller amount and the secondly injected fuel starts firing almost simultaneously with the injection, the cylinder pressure and the chamber temperature do not increase as abruptly as in the case of preliminary mixed combustion in the undivided injection (i.e. explosive combustion of fuel injected during the firing delay period). Therefore, the combustion noise and NOₓ being produced keep at low levels.

Also in case that the pilot injection is performed, abrupt increase of the cylinder pressure and the chamber temperature are avoided, but in this case the pilot injection insufficiently increases the chamber temperature until primary injection. Therefore, no smoke suppression effect is shown.

Consequently, the third injection is performed after an injection interval Δt2 following the second injection, so that Δt2 causes discontinuity in fuel spray. Therefore, air exists in the spray gap, and it mixes with the sprayed fuel so sufficiently that the resulting mixture actively combusts then to suppress smoke production. At that instant, the decreasing cylinder pressure temporarily increases in the expansion stroke, as indicated in dashed line in FIG. 4.

In addition, when the engine 1 is not idling and is in cold state with low temperature intake air, two-divided injection is performed, not three-divided injection as in step A6, in order to keep fuel efficiency. That is, divided injection is effective to improve the combustion, however, delay of the injection completion due to dividing results in the poor heat efficiency, therefore two-divided injection, which completes the injection earlier, is selected to improve fuel efficiency as possible.

Additionally, pilot injection is performed during idling (with low engine speed and low engine load) being intended to reduce high-frequency combustion noise. Moreover, three-divided injection and the injection timing retard are preferably performed during idling, being intended to increase the temperature of the exhaust gas and the catalyst (to activate the catalyst) by the combustion completion delay because of low catalyst temperature then.

It should be appreciated that the embodiment described above sets the number of divided injection to as shown in FIG. 3 according to the engine operating condition, but the number of divided parts may be any appropriate number up to 7 in idling or according to the engine temperature.

It should be also appreciated that the first injection prior to TDC according to the invention may be limited to be performed under lower engine speed, or lower engine load because it has shown that the injection timing is to be advanced as the engine speed or the engine load increases.

Accordingly, the ECU 35 as a preferred fuel injection control means controls the divided fuel injection such that the first injection is initiated prior to the top dead center of the compression stroke, and sets the interval Δt1 between the termination of said first injection of said divided fuel injection and the start of said second injection of said divided fuel injection to be such that the firstly injected fuel is expected or calculated to already have started firing when the second injection is started.

## Claims

1. A fuel injection system (A) for a diesel engine comprising,
a fuel injector (5) so disposed as to front the combustion chamber (4) of the engine (1),
required engine output monitoring means (9; 32) for monitoring a required engine output,
injection amount determining means (35) for determining (A2) an amount of fuel (Q1; Q2; Q3) to be injected based on the required engine output monitored by said monitoring means (9; 32), and
fuel injection control means (35) for controlling said fuel injector (5) to inject fuel with the amount (Q1; Q2; Q3) determined by said injection amount determining means (35) near a top dead center (TDC) of a compression stroke in a divided manner so that the injected fuel combusts continuously,
wherein said fuel injection control means (35) starts (I1) the first injection of said divided fuel injections prior to the top dead center (TDC) of the compression stroke, and starts (12) the second injection of the divided fuel injection after a time interval (Δt1; Δt) such that the firstly injected fuel is expected to already have started firing.

2. A fuel injection system for a diesel engine as defined in claim 1, wherein the fuel injection control means (35) starts (I2) the second injection of the divided fuel injection at the timing decided according to the fuel amount (Q2; Q) to be injected so that the second fuel injection start timing (I2) is advanced with higher engine speed and/or higher engine load.

3. A fuel injection system for a diesel engine as defined in claim 1 or 2, wherein said fuel injection control means (35) terminates said first injection of said divided fuel injections prior to an expansion stroke.

4. A fuel injection system for a diesel engine as defined in any of the preceding claims, wherein said fuel injection control means (35) sets an amount (Q1) of said first injection of said divided fuel injections to be less than an amount (Q2) of said second fuel injection of said divided fuel injections.

5. A fuel injection system for a diesel engine as defined in any one of the preceding claims, wherein said fuel injection control means (35) sets the interval (Δt1; Δt) between the termination of said first injection of said divided fuel injection and the start (I2) of said second injection of said divided fuel injection to be between 50 and 1000 µs, more preferably between 300 and 700 µs.

6. A fuel injection system as defined in any one of the preceding claims, wherein said fuel injection control means (35) controls the first injection to be prior to the top dead center (TDC) of the compression stroke only under lower engine speed and/or lower engine load.

7. A fuel injection control method for a diesel engine comprising the following steps:
monitoring (A1) a required engine output,
determining (A2) the amount of fuel (Q1; Q2; Q3) to be injected based on the monitored required engine output, and
controlling (A6; A8) the injection of fuel to an amount (Q1; Q2; Q3) determined in the determination step (A2) near a top dead center (TDC) of a compression stroke in a divided manner so that the injected fuel combusts continuously,
wherein the first injection of said divided fuel injections is started (I1) prior to the top dead center (TDC) of the compression stroke, and the second injection of the divided fuel injection is started (12) after a time interval (Δt1; Δt) such that the firstly injected fuel is expected to already have started firing.

8. A fuel injection method for a diesel engine as defined in claim 7, wherein the second injection of the divided fuel injection is started (12) at the timing decided according to the fuel amount (Q2; Q) to be injected so that the second fuel injection start timing (I2) is advanced with higher engine speed and/or higher engine load.

9. A fuel injection method for a diesel engine as defined in claim 7 or 8, wherein the first injection of said divided fuel injections is terminated prior to an expansion stroke.

10. A computer program product for controlling fuel injection of a diesel engine comprising code means able to perform, when loaded on a suitable computer system a fuel injection method as defined in any of the claims 7 to 9.
